# EUROPEAN PATENT APPLICATION

(11) **EP 4 589 814 A1**
(43) Date of publication of application: **23.07.2025**
(21) Application number: 24850489.6
(22) Date of filing: 12.03.2024
(51) Int. Cl.: H02K 1/20, H02K 9/19

(54) **ELECTRIC-MOTOR STATOR COOLING DEVICE AND ELECTRIC MOTOR**

(30) Priority: 10.08.2023 CN 202322154067 U
(71) Applicant: Jing-Jin Electric Technologies Co., Ltd, Beijing 100023 (CN)
(72) Inventor: SI, Te, Beijing 100023 (CN); JIN, Haitao, Beijing 100023 (CN)
(74) Representative: Dondi, Silvia
(86) International application number: PCT/CN2024/081220
(87) International publication number: WO 2025/030829

(57) **Abstract**

A cooling device for a stator of a motor and a motor are disclosed. The cooling device comprises: an oil inlet (1), an oil path structure (2) and an oil drain structure (3). The oil inlet (1) is arranged on an outer surface of the stator, the oil path structure (2) is arranged in an annular inner portion of the stator, and the oil drain structure (3) is arranged on two annular bases (32) of the stator. When the cooling device works, cooling oil enters from the oil inlet (1), flows through the oil path structure (2) and flows out from the oil drain structure (3). The cooling device for a stator of a motor can make the stator dissipate heat more fully, increase the versatility of the motor housing, fully reduce the temperature rise of the motor, and maximize the performance of the motor.

## Description

### Cross-reference to related applications

This application claims priority to the Chinese patent application No. 202322154067.8 filed with the Chinese Patent Office on August 10, 2023 and entitled "Electric-motor Stator Cooling Device and Electric Motor", which is incorporated by reference herein in its entirety.

### TECHNICAL FIELD

The present disclosure relates to the technical field of motors, and specifically relates to a cooling device for a stator of a motor and a motor.

### BACKGROUND

As new energy vehicles become popular, requirements for the volume and power density of the electric drive system have been increasingly higher, and the structure of the power system is required to be as compact and lightweight as possible. However, the traditional water cooling solution needs the design of water channels, and the overall size of motor is inevitably large, which cannot meet the needs of the market. Therefore, selecting oil as the internal direct cooling medium has become a development trend of the electric drive system of new energy vehicles.

The conventional cooling structures usually adopt a method in which the cooling oil falls to the end of the stator and the winding to cool them. This method will cause uneven cooling of the stator and cannot achieve a good cooling effect. In addition, the cooling structure requires a special housing to arrange the oil path, which is not conducive to the generalization of components, thereby restricting the full use of motor performance and resulting in resource waste and high costs.

It should be noted that the description here only provides background information related to the present disclosure and do not necessarily constitute prior art.

### SUMMARY

In view of the above problems, the present disclosure proposes a cooling device for a stator of a motor and a motor to overcome or at least partially solve the above problems.

The embodiments of the present disclosure adopt the following technical solutions.

In a first aspect, an embodiment of the present disclosure provides a cooling device for a stator of a motor. The cooling device comprises an oil inlet, an oil path structure and an oil drain structure. The oil inlet is arranged on an outer surface of the stator, the oil path structure is arranged in an annular inner portion of the stator, and the oil drain structure is arranged on two annular bases of the stator. When the cooling device works, cooling oil enters from the oil inlet, flows through the oil path structure and flows out from the oil drain structure.

Preferably, the oil drain structure is an arc-shaped oil spray ring, the oil spray ring comprises a first oil spray ring and a second oil spray ring, the first oil spray ring is arranged on one annular base of the stator, and the second oil spray ring is symmetrically arranged on the other annular base of the stator.

Preferably, the oil inlet is arranged at a middle position of the outer surface of the stator, and the oil inlet and the oil spray ring are respectively arranged on two sides of an axis of the stator; a distance from the oil inlet to a center position of the first oil spray ring and a distance from the oil inlet to a center position of the second oil spray ring are equal.

Preferably, the oil path structure is enclosed in the annular inner portion of the stator, and the oil inlet is arranged at a middle position of the oil path structure; the oil path structure comprises oil path holes arranged in the annular inner portion of the stator and baffles arranged on two annular ends of the stator.

Preferably, the oil spray ring includes an oil spray ring groove and a mounting base, and a plurality of oil drain holes are arranged on the oil spray ring groove; the mounting base is hollow inside.

Preferably, an inner space of the oil spray ring is gradually reduced from middle to two ends to increase the injection pressure of the cooling oil.

In a second aspect, an embodiment of the present disclosure also provides a motor comprising any cooling device for a stator of a motor as described in the first aspect.

In a third aspect, an embodiment of the present disclosure also provides a vehicle comprising the motor as described in the second aspect.

At least one of the above technical solutions adopted in the embodiments of the present disclosure can achieve the following beneficial effects.

In the present disclosure, by making improvements on the structure of the oil path and the oil spray ring of the stator of a motor, the stator is cooled through the oil path structure of the stator itself and the oil spray ring, so that the heat dissipation of the stator is more sufficient, the temperature rise of the motor is fully reduced, and the motor performance is maximized.

The above is only an overview of the technical solutions of the present disclosure. In order to better understand the technical means of the present disclosure so that it can be implemented according to the contents of the description, and in order to make the above and other objects, features and advantages of the present disclosure more obvious and easier to understand, the specific embodiments of the present disclosure are given below.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present disclosure. Moreover, throughout the drawings, the same reference numerals are used to denote the same components. In the drawings:
FIG. 1 is a first perspective view of a cooling device for a stator of a motor in an embodiment of the present disclosure;
FIG. 2 is a second perspective view of the cooling device for the stator of the motor in the embodiment of the present disclosure;
FIG. 3 is a cross-sectional view of the cooling device for the stator of the motor in the embodiment of the present disclosure;
FIG. 4 is a first perspective view of an oil path structure of the cooling device for the stator of the motor in the embodiment of the present disclosure;
FIG. 5 is a second perspective view of the oil path structure of the cooling device for the stator of the motor in the embodiment of the present disclosure; and
FIG. 6 is a second view of the structure of an oil spray ring in the embodiment of the present disclosure.

In the drawings: 1, oil inlet; 2, oil path structure; 3, oil drain structure; 21, baffle; 22, oil path hole; 31, oil spray ring; 32, base; 311, oil drain hole.

### DETAILED DESCRIPTION

In order to make the object, technical solutions, and advantages of the present disclosure clearer, the present disclosure will be described clearly and completely in conjunction with the specific embodiments and corresponding drawings. Obviously, the embodiments described are only part of rather than all of the embodiments of the present disclosure. Based on the embodiments in the present disclosure, all other embodiments obtained by those of ordinary skill in the art without paying creative work shall fall within the protection scope of the present disclosure.

The concept of the present disclosure is, in view of the current situation that the motor performance is restricted due to uneven stator cooling in conventional cooling devices for a stator of a motor, to propose a cooling device for a stator of a motor, in which, by making improvements on the combination of the oil path structure and the oil drain structure of the stator of the motor, the cooling oil flows through the oil path structure and the oil drain structure of the stator to cool the stator of the motor, thereby fully reducing the temperature rise of the motor and maximizing the motor performance.

The technical solutions provided by embodiments of the present disclosure will be described in detail in conjunction with the accompanying drawings.

The embodiments of the present disclosure provide a cooling device for a stator of a motor and a motor. Core components of a motor mainly include a stator and a rotor. The stator is usually composed of an iron core, a winding and a base. The main function of the stator is to generate a rotating magnetic field. The rotor is a rotating body supported by a bearing, and its main function is to be cut by magnetic lines of force in the rotating magnetic field to generate a current. When the vehicle is running at a high speed, due to discharging of a large current, the motor will not convert all the electrical energy into kinetic energy, and some of it will be converted into heat energy according to the law of conservation of energy. However, if the temperature exceeds a certain limit, it will affect the performance of the motor.

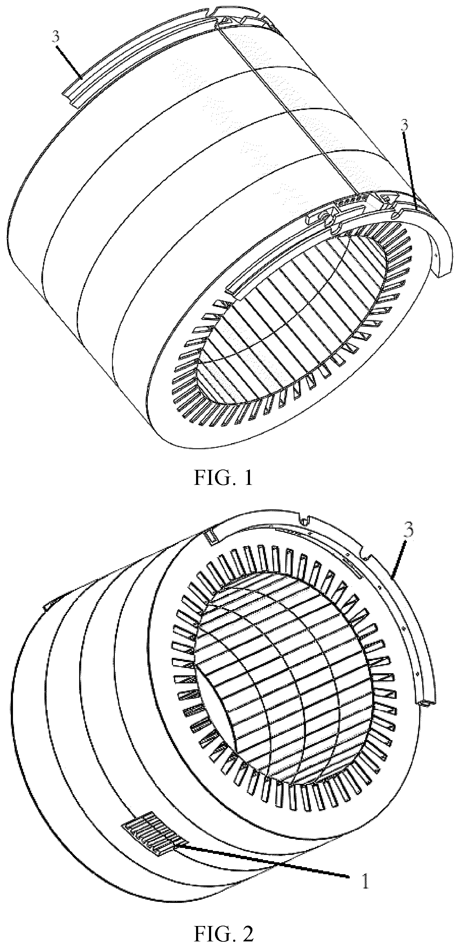

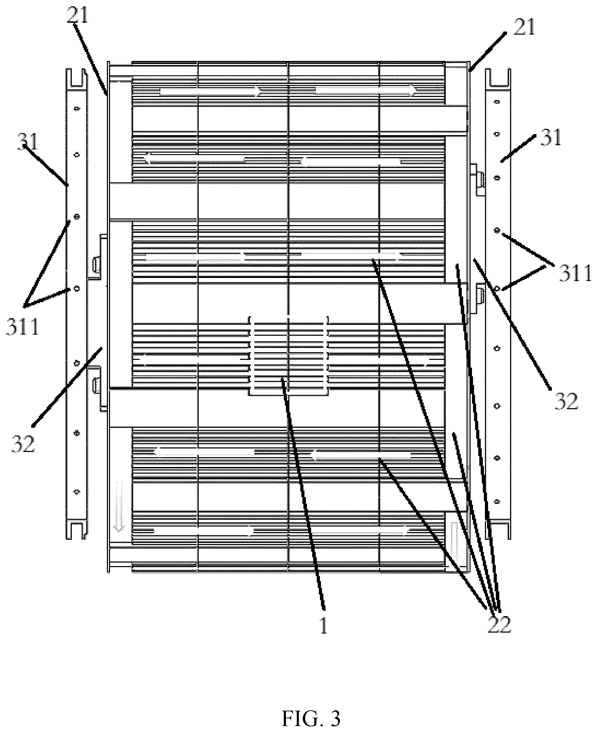

FIG. 1 is a first perspective view of a cooling device for a stator of a motor in an embodiment of the present disclosure; FIG. 2 is a second perspective view of the cooling device for the stator of the motor in the embodiment of the present disclosure. As can be seen from these drawings, the cooling device comprises an oil inlet 1 and an oil drain structure 3, the oil inlet 1 is arranged on the outer surface of the stator, and the oil drain structure 3 is arranged on two annular bases of the stator. As shown in FIG. 3, the cooling device also comprises an oil path structure 2, which is arranged in an annular inner portion of the stator. When the cooling device works, under the action of the oil pump, the cooling oil enters from the oil inlet 1, flows through the oil path structure 2 and flows out from the oil drain structure 3.

In some examples of the present disclosure, the oil inlet is arranged at a middle position of the outer surface of the stator, and the oil inlet and the oil spray ring are respectively arranged on two sides of an axis of the stator; the oil drain structure is an arc-shaped oil spray ring, the oil spray ring comprises a first oil spray ring and a second oil spray ring, the first oil spray ring is arranged on one annular base of the stator, and the second oil spray ring is symmetrically arranged on the other annular base of the stator; a distance from the oil inlet to a center position of the first oil spray ring and a distance from the oil inlet to a center position of the second oil spray ring are equal.

As shown in FIG. 2, it can be seen that the oil inlet 1 is arranged at the middle position position of the outer surface of the stator, which facilitates the entering of cooling oil. The oil drain structure 3 is an arc-shaped oil spray ring 31. The oil spray ring 31 comprises a first oil spray ring and a second oil spray ring. The structures of the two oil spray rings are similar. The first oil spray ring is arranged on one annular base of the stator, and the second oil spray ring is symmetrically arranged on the other annular base of the stator. The cooling oil enters from the oil inlet 1, then flows to two ends of the two bases of the stator, and flows out through the first oil spray ring and the second oil spray ring respectively. In order to make the amount of cooling oil discharged from the two oil spray rings equal, the oil inlet 1 is arranged at a middle position of the outer surface of the stator, the oil inlet 1 and the oil spray ring 31 are respectively arranged on two sides of the outer surface of the stator, and the distance from the oil inlet 1 to the center position of the first oil spray ring and the distance from the oil inlet 1 to the center position of the second oil spray ring are equal. In practice, the arrangement of such a symmetrical structure makes the cooling device run more stably and the cooling effect is better.

In some examples of the present disclosure, the oil path structure is enclosed in an annular inner portion of the stator, and the oil inlet is arranged at a middle position of the oil path structure; the oil path structure comprises oil path holes arranged in the annular inner portion of the stator and baffles arranged on two annular ends of the stator.

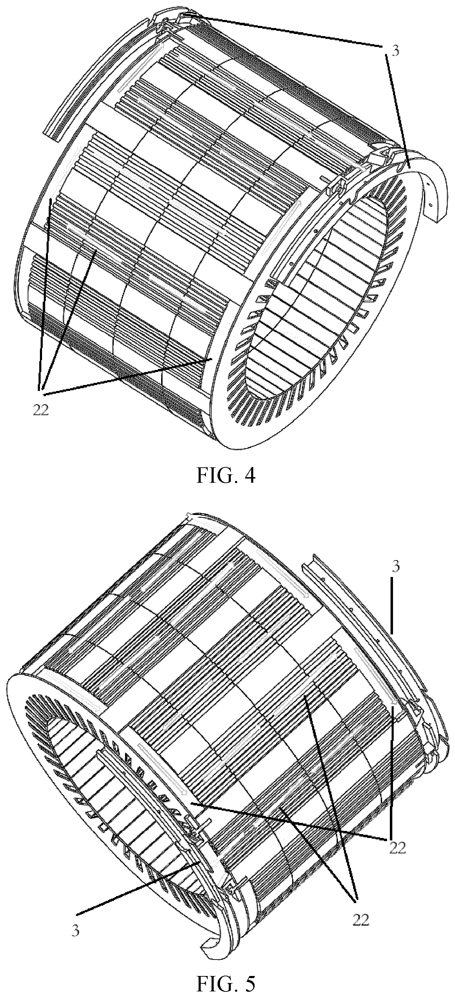

In an example of the present disclosure, the oil path structure 2 is enclosed in an annular inner portion of the stator, and its structure cannot be seen from the outer surface of the stator. Through the cross-sectional view shown in FIG. 3, the structural features of the oil path structure 2 can be seen. The oil inlet 1 is arranged at a middle position position of the oil path structure 2 to facilitate the entering of cooling oil. The oil path structure 2 comprises oil path holes 22 arranged in the annular inner portion of the stator and baffles 21 arranged on two annular ends of the stator. After the cooling oil enters the oil inlet 1, it flows horizontally along the oil path hole 22 to two ends of the stator. When it flows to the ring base of the stator, it flows longitudinally for a certain distance under the action of the baffle 21, and then enters the horizontal oil path hole again. The length of each longitudinal oil path hole can be set selectively. When the length of each longitudinal oil path hole is shorter, the path of the cooling oil flowing in the oil path structure 2 will be longer, and the cooling effect will be better. The flow path of the cooling oil in the oil path structure 2 is shown in FIGS. 4 and 5.

In some examples of the present disclosure, the oil spray ring comprises an oil spray ring groove and a mounting base, and a plurality of oil drain holes are arranged on the oil spray ring groove; the mounting base is hollow inside.

As shown in FIG. 3, the oil spray ring 31 comprises an oil spray ring groove and a mounting base 32, and a plurality of oil drain holes 311 are arranged on the oil spray ring groove; the mounting base 32 is hollow inside, so that the cooling oil flows out of the oil path structure, then enters the oil spray ring groove through the mounting base 32 of the oil spray ring. Since the stator is installed inside the motor housing, the oil drain ring groove can be in seamless contact with the motor housing, thereby forming a closed oil spray passage, and the cooling oil cools the wire wraps at two ends of the stator through the oil drain holes 311.

In some examples of the present disclosure, the inner space of the oil spray ring is gradually reduced from the middle to two ends to increase the spray pressure of the cooling oil.

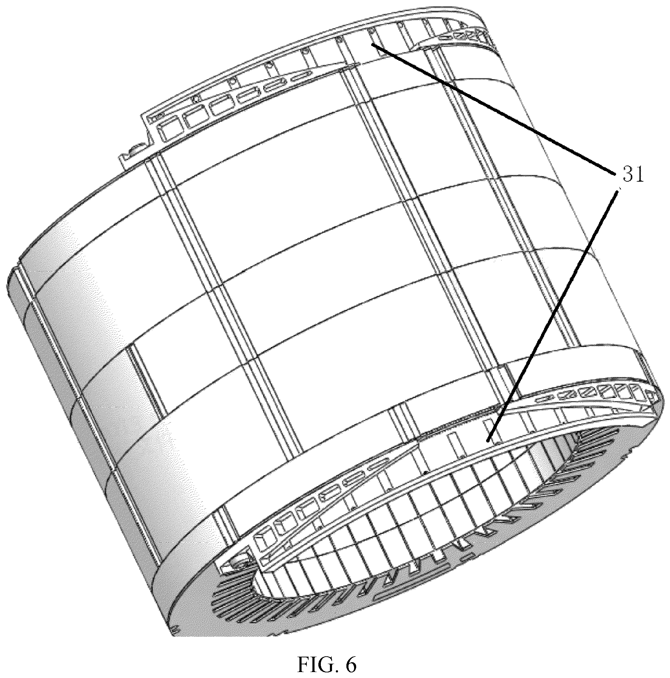

FIG. 6 is a second schematic view of the structure of the oil spray ring 31 in the embodiment of the present disclosure. As can be seen from FIG. 6, the oil spray ring is an annular structure with a hollow interior and is fixedly connected to the stator. After the cooling oil flows out of the oil path structure, it enters the middle part of the oil spray ring. After passing through the oil spray ring, the cooling oil is sprayed onto the stator. The oil spray ring structure gradually reduces in space from the middle part to two ends. The spray pressure of the cooling oil is increased by reducing the space, so that the cooling effect is better.

In the present disclosure, the cooling oil enters from the oil inlet at the middle position of the stator, and then flows toward two ends of the stator. The oil is guided to the top of the stator circumference through the oil path holes on the stator and the baffles at two ends, and then flows through the oil spray ring groove and the oil drain holes on the groove to cool the wire wraps at two ends of the stator. This structure allows the cooling oil in the spraying process not only cool the winding ends, but also fully cool the iron core itself, thereby reducing the temperature rise of the motor, reducing the demagnetization risk of magnetic steel, extending the service life of motor, and thus maximizing the utilization of resource.

An embodiment of the present disclosure further provides a motor comprising the cooling device for a stator of a motor as described above. For other parts of the motor, please refer to the prior art, which will not be repeated herein.

An embodiment of the present disclosure further a vehicle comprising the motor as described above. For other parts of the vehicle, please refer to the prior art, which will not be repeated herein.

It should be noted that in the description of the present disclosure, the terms "first", "second", etc. are only used for descriptive purposes and should not be understood as indicating or implying relative importance. Furthermore, in the description of the present disclosure, unless otherwise specified, "a plurality of" means two or more.

In the present disclosure, unless otherwise specified and defined, the terms such as "installation", "connection", "fixation" should be understood in a broad sense, for example, it may be fixedly connected, or detachably connected, or integrally connected; it may also be mechanically connected, electrically connected, or telecommunicated with each other; it may be directly connected or indirectly connected through a middleware; it may also be internally communicated or interacted between two components. For a person of ordinary skill in the art, the specific meaning of these terms in the present disclosure should be understood according to specific situations.

In the present disclosure, unless otherwise specified and defined, the first feature being located "on" or "beneath" the second feature may be that the first and second features are in direct contact or in indirect contact through an intermediate medium. Moreover, the first feature being "above", "over" or "on" the second feature may be that the first feature is directly or diagonally above the second feature, or only indicate that the first feature is horizontally higher than the second feature. The first feature being "below" or "under" the second feature may be that the first feature is directly or diagonally below the second feature, or only indicate that the horizontal height of the first feature is less than that of the second feature.

The description of any process or method in a flowchart or otherwise described herein may be understood as comprising one or more modules, fragments, or portions of codes of executable instructions for implementing specific logical functions or procedures, and the scope of preferred embodiments of the present disclosure comprises other implementations, which may not be in the order shown or discussed, including performing functions in a fundamentally simultaneous manner or in reverse order based on the functions involved. This should be understood by those skilled in the art.

In the description of this specification, terms such as "an embodiment", "some embodiments", "an example", "a specific example", or "some examples" means that the specific features, structures, materials, or features described in conjunction with the embodiments or examples are included in at least one embodiment or example of the present disclosure. In this specification, the illustrative description of the above terms may not necessarily refer to the same embodiment or example. Moreover, the specific features, structures, materials, or characteristics described can be combined in an appropriate manner in any one or more embodiments or examples.

Although embodiments of the present disclosure have been shown and described above, it can be understood that the above embodiments are exemplary and cannot be understood as a limitation of the present disclosure. A person of ordinary skill in the art may make changes, modifications, substitutions, and variations to the above embodiments within the scope of the present disclosure.

## Claims

1. A cooling device for a stator of a motor, **characterized by** comprising: an oil inlet (1), an oil path structure (2) and an oil drain structure (3), wherein the oil inlet (1) is arranged on an outer surface of the stator, the oil path structure (2) is arranged in an annular inner portion of the stator, and the oil drain structure (3) is arranged on two annular bases (32) of the stator;
when the cooling device works, cooling oil enters from the oil inlet (1), flows through the oil path structure (2) and flows out from the oil drain structure (3).

2. The cooling device according to claim 1, **characterized in that**: the oil drain structure (3) is an arc-shaped oil spray ring (31), the oil spray ring (31) comprises a first oil spray ring (31) and a second oil spray ring (31), the first oil spray ring (31) is arranged on one annular base (32) of the stator, and the second oil spray ring (31) is symmetrically arranged on the other annular base (32) of the stator.

3. The cooling device according to claim 2, **characterized in that**: the oil inlet (1) is arranged at a middle position of the outer surface of the stator, and the oil inlet (1) and the oil spray ring (31) are respectively arranged on two sides of an axis of the stator.

4. The cooling device according to claim 3, **characterized in that**: a distance from the oil inlet (1) to a center position of the first oil spray ring (31) and a distance from the oil inlet (1) to a center position of the second oil spray ring (31) are equal.

5. The cooling device according to claim 3, **characterized in that**: the oil path structure (2) is enclosed in the annular inner portion of the stator, and the oil inlet (1) is arranged at a middle position of the oil path structure (2).

6. The cooling device according to claim 5, **characterized in that**: the oil path structure (2) comprises oil path holes (22) arranged in the annular inner portion of the stator and baffles (21) arranged on two annular ends of the stator.

7. The cooling device according to claim 3, **characterized in that**: the oil spray ring (31) includes an oil spray ring groove and a mounting base, and a plurality of oil drain holes (311) are arranged on the oil spray ring groove.

8. The cooling device according to claim 7, **characterized in that**: the mounting base is hollow inside.

9. The cooling device according to claim 2, **characterized in that**: an inner space of the oil spray ring (31) is gradually reduced from middle to two ends to increase the injection pressure of the cooling oil.

10. A motor comprising the cooling device for a stator of a motor according to any one of claims 1-9.
